# EUROPÄISCHE PATENTSCHRIFT

(11) **EP 1 851 451 B1**
(45) Veröffentlichungstag und Bekanntmachung des Hinweises auf die Patenterteilung: **10.04.2013**
(21) Anmeldenummer: 06706748.8
(22) Anmeldetag: 08.02.2006
(51) Int. Cl.: F16C 19/16

(54) **ZWEIMASSENSCHWUNGRAD EINES KRAFTFAHRZEUGS**
DUAL-MASS FLYWHEEL OF A MOTOR VEHICLE
VOLANT D'INERTIE A DEUX MASSES D'UN VEHICULE AUTOMOBILE

(30) Priorität: 22.02.2005 DE 102005008007
(43) Veröffentlichungstag der Anmeldung: 07.11.2007
(73) Patentinhaber: Schaeffler Technologies AG & Co. KG, 91074 Herzogenaurach (DE)
(72) Erfinder: WINKELMANN, Ludwig, 91056 Erlangen (DE); DITTMER, Steffen, 91086 Aurachtal (DE); KLÖPFER, Bernhard, 91438 Bad Windsheim (DE)
(86) Internationale Anmeldenummer: PCT/EP2006/001108
(87) Internationale Veröffentlichungsnummer: WO 2006/089636

(56) Entgegenhaltungen:
- EP-A- 1 564 435
- DE-A1- 19 631 437
- DE-U- 7 005 916
- DE-U- 7 036 423
- FR-A- 2 858 675

## Beschreibung

### Bezeichnung der Erfindung

Zweimassenschwungrad eines Kraftfahrzeugs.

### Gebiet der Erfindung

Die Erfindung betrifft ein Zweimassenschwungrad eines Kraftfahrzeugs, umfassend eine Primärmasse und eine Sekundärmasse, die über ein drehbar bezüglich einander gelagert sind.

### Hintergrund der Erfindung

Ein Zweimassenschwungrad ist ein Torsionsschwingungsdämpfer, der insbesondere in Kraftfahrzeugen zwischen die Brennkraftmaschine und das Getriebe geschaltet ist. Es besteht aus einer direkt mit der Abtriebswelle der Brennkraftmaschine verbundenen Primärmasse und einer über die Kupplung gekoppelt mit der Eingangswelle des Getriebes verbundenen Sekundärmasse, die beide über ein dämpfendes Mitnehmersystem in Form von üblicherweise zwei einander gegenüberliegenden, gebogenen Spiraldruckfedern gekoppelt sind. Beide Massen sind über ein Wälzlager drehbar bezüglich einander gelagert. Beim Betrieb des Kraftfahrzeugs wird über die drehende Kurbelwelle die Primärmasse aktiv angetrieben, über die Mitnehmerdämpfer wird die Sekundärmasse mitgenommen, die ihrerseits die Getriebeeingangswelle treibt. Das heißt, im Betrieb rotiert das gesamte Zweimassenschwungrad. Über die Federmitnehmerdämpfer werden zum einen Drehungleichförmigkeiten, die aus Unwuchten der Massen resultieren, gedämpft, zum anderen aber auch Ungleichmäßigkeiten der Brennkraftmaschine. Die drehbare Lagerung verbunden mit der Dämpfung über die Federmitnehmer ermöglicht ein Verdrehen der beiden Massen zueinander, um die Ungleichförmigkeiten zu kompensieren. Der dabei auftretende maximale oszillierende Schwenkwinkel beträgt während der Fahrt ca. 0,4°. Das heißt, das Wälzlager wird während des üblichen Betriebs kaum dynamisch hinsichtlich Relativ-Drehzahl beansprucht. Anders jedoch beim Anlassen des Fahrzeugs, wo es zu einem oszillierenden Schwenkwinkel von +/- 60° kommen kann. Hier erfolgt also eine tatsächliche stärkere Verdrehung der Primär- bezüglich der Sekundärmasse. Die Funktion derartiger Zweimassenschwungräder ist an und für sich bekannt und bedarf keiner detaillierten Beschreibung.

Vor allem im Anlassfall ist ein Lagersystem mit sehr geringer Reibung, also mit einem sehr geringen Reibungskoeffizienten, bevorzugt < 0,05 gewünscht. Einen solchen kann man grundsätzlich mit einem Wälzlager erzielen. Infolgedessen wurden primär spezielle Kugellager in Form sogenannter ZMS- oder DFC-Lager verwendet, bei denen es sich um Speziallager handelt, die in der Herstellung aufgrund der Ausführung der Lager als Massivlager und der Verwendung teuerer Kunststoffkappen zur Gewährleistung der geforderten Dichtigkeit sehr teuer sind. Die Kunststoffkappen sind darüber hinaus bei der Montage sehr empfindlich, weshalb die Lager auch leicht beschädigt werden, wenn sie eingesetzt werden. Alternativ dazu ist es bekannt, anstelle eines Wälzlagers ein Gleitlager einzusetzen. Ein solches Gleitlager weist jedoch einen relativ hohen Reibungskoeffizienten auf, darüber hinaus können axiale Kräfte, die auf das Lager insbesondere beim Betätigen der nachgeschalteten Kupplung wirken, über ein Gleitlager nicht bzw. nur bedingt aufgenommen werden. Zwar lässt ein Gleitlager die Ausnutzung des vorhandenen, sehr geringen Bauraums zu, das heißt, die Integration eines Gleitlagers in den sehr schmalen Bauraum ist ohne weiteres möglich, jedoch sind Gleitlager den gegebenen mechanischen Anforderungen oft nicht gewachsen und verschleißen insbesondere im Hinblick auf gegebene Wank- und Taumelbewegungen der Sekundärmasse, die zu einer Schieflage und zu örtlich hoher Herz'schen-Pressung führen, nicht gewachsen. Bekannte Wälzlager, die in diesem Bereich eingesetzt werden, wie die DFC-Lager, sind wie beschrieben teuer, auch ist eine Integration in den sehr schmalen Bauraum, der nicht zuletzt aufgrund der Forderung, das Lager möglichst weit entfernt von den kupplungsseitigen Reibflächen zur Vermeidung einer unzulässig starken Erwärmung des Lagers möglicht schmal und nahe der Drehachse liegt, nur schwer möglich.

### Zusammenfassung der Erfindung

Der Erfindung liegt damit das Problem zugrunde, ein Zweimassenschwungrad anzugeben, bei dem die beiden Massen zueinander im Hinblick auf die entstehenden Kräfte sicher und reibungsarm gelagert sind, mit einem Wälzlager, das im Stande ist, die wirkenden Axial- und Radialkräfte aufzunehmen, in seiner Herstellung billig ist und ohne weiteres bei Gewährleistung eines sehr niedrigen Reibungskoeffizienten in den sehr geringen Bauraum integriert werden kann.

Zur Lösung des Problems ist zum einen ein Zweimassenschwungrad vorgesehen, umfassend eine Primärmasse und eine Sekundärmasse, die über ein Wälzlager drehbar bezüglich einander gelagert sind, wobei das Wälzlager als Schrägkugellager, insbesondere als Axialschrägkugellager ausgebildet ist. Das erfindungsgemäße Zweimassenschwungrad zeichnet sich dadurch aus, dass das Wälzlager ein abgedichtetes Gehäuse, in dem in Achsrichtung gesehen wenigstens ein im Wesentlichen seitlich zu den Kugeln liegender Schmiermittelaufnahmeraum ausgebildet ist, aufweist, wobei dem der Aufnahme axialer Kräfte dienenden Wälzlager ein der Aufnahme radialer Kräfte dienendes zylindrisches Gleitlager axial nebengeordnet ist.

Das erfindungsgemäße Zweimassenschwungrad zeichnet sich also durch die Verwendung eines Wälzlagers in Form eines Schrägkugellagers, bevorzugt eines Axialschrägkugellagers, mit einem bauraumoptimiert angeordneten, sich axial erstreckenden Schmiermittelaufnahmeraum aus, wie es in einer beliebigen Ausgestaltung nachfolgend noch beschrieben wird. Die Reibungskoeffizienten eines Schrägkugellagers liegt bei etwa 0,003, verglichen mit den sehr hohen Werten einer Gleitlagerung. Der Umstand, dass der Schmiermittelaufnahmeraum in axialer Ausrichtung positioniert ist, das heißt, dass das Gehäuse in dieser Richtung verlängert ist, führt zu einer optimalen Ausnutzung des gegebenen Bauraums, nachdem das Lager in radialer Richtung gesehen kaum aufbaut, jedoch in der Regel in axialer Richtung gesehen etwas mehr Bauraum zur Verfügung steht. Hierdurch wird eine sehr hohe Gebrauchsdauer erreicht.

5 Daneben ist es erfindungsgemäß zweckmäßig, dass dem der Aufnahme axialer Kräfte dienenden Wälzlager zusätzlich ein der Aufnahme radialer Kräfte dienendes Gleitlager axial nebengeordnet ist. Durch die Kombination des erfindungsgemäßen Axialschrägkugellagers mit einem Gleitlager bei dem erfindungsgemäßen Zweimassenschwungrad werden die an der Lagerstelle der Sekundärmasse zur Primärmasse zu übertragenden Kraftkomponenten aufgeteilt. Während das Wälzlager die Axialkräfte übernimmt, die insbesondere bei gedrücktem Kupplungspedal den Hauptanteil ausmachen, werden die Radialkräfte vom Gleitlager aufgenommen, wobei als Radialkräfte nur geringe Kräfte aus der Unwucht resultieren.

Die Erfindung schlägt den Einsatz eines Schrägkugellagers, bevorzugt eines Axialschrägkugellagers, vor, das zum einen Axial- wie auch Radialkräfte der Größenordnung, wie sie im Bereich der Massenlagerung auftreten, aufnehmen kann. Zur Gewährleistung einer Verschleißfestigkeit ist erfindungsgemäß ein abgedichtetes Gehäuse vorgesehen, in dem wenigstens ein Schmiermittelaufnahmeraum ausgebildet ist, der sich im Wesentlichen seitlich der Kugeln erstreckt und ein hinreichend großes Volumen hat, dass ausreichend Schmiermittel, primär Fett, aufgenommen werden kann, so dass stets eine ausreichende Schmierung zur Vermeidung von Mangelschmierung möglich ist.

Die Teile des Wälzlagers, das wie beschrieben nur mit einem maximalen oszillierenden Schwenkwinkel beim Anlassen von ca. ± 60° und während des Fahrbetriebs von ca. ± 0,4° dreht, müssen keinen allzu großen Genauigkeitsansprüchen genügen, weshalb es ohne weiteres möglich ist, die das Wälzlager in seiner Gesamtheit bildenden Teile auf kostengünstige, einfache Weise herzustellen. Die Bauteile können dabei gezogen, gepresst oder spangebend hergestellt und gegebenenfalls nachbearbeitet werden, beispielsweise durch Schleifen oder Härten oder dergleichen. Es ist im jeden Fall nicht erforderlich, die Teile in kostenintensivem Herstellungsverfahren wie aus Vollmaterial oder dergleichen oder unter Verwendung teurer Materialien wie im Falle der DFC-Lager des teuren Kunststoffkappengehäuses herzustellen. Vielmehr ist es möglich, das Wälzlager sehr kostengünstig zu produzieren.

In einer ersten Efindungsausgestaltung kann das Gehäuse des Wälzlagers mittels eines im Querschnitt im Wesentlichen U-förmigen ersten Gehäuserings und eines im Querschnitt L- oder U-förmigen zweiten Gehäuserings, die entgegengesetzt zueinander gerichtet sind, gebildet sein, wobei in dieses Gehäuse der Innen- und der Außenring sowie die Kugeln nebst Käfig integriert sind. Dabei kann der erste Gehäusering den Außenring umgreifen und der zweite Gehäusering in den ersten Gehäusering, am Ringschenkel des ersten Gehäuserings anliegend eingesetzt sein, wobei beide Gehäuseringe zum Innenring hin abgedichtet sind. Das heißt, es sind lediglich zwei Dichtstellen zum Innenring hin vorgesehen. Die Dichtung selbst kann dabei über eine Spalt- oder Labyrinthdichtung oder über ein separates Dichtelement realisiert sein. Als ein solches Dichtelement kann eine am Schenkel des Gehäuserings angeordnete, vorzugsweise schleifende Ringdichtlippe oder ein Vlies- oder Filzring vorgesehen sein. Die Dichtungen selbst können aufgeschnappt, aufgeschoben oder im Falle von Kunststoffdichtungen auch unmittelbar an dem Gehäusering angespritzt oder anvulkanisiert werden.

Eine weitere Erfindungsalternative sieht vor, dass der Innenring und/oder der Außenring ein- oder beidseits des die Führungsfläche für die Kugeln bildenden Abschnitts angeformte, einen Teil des Gehäuses bildende Gehäuseabschnitte aufweist. Bei dieser besonders zweckmäßigen Erfindungsausgestaltung bilden der Innen- bzw. der Außenring selbst entsprechende Gehäuseabschnitte, sie haben also eine Doppelfunktion, nämlich die eigentliche Kugelführungsfunktion, daneben die der Gehäusekapselung. In diesem Zusammenhang sieht eine Erfindungsausgestaltung vor, dass am Innen- und am Außenring beidseits der die Führungsflächen bildenden Abschnitte jeweils Gehäuseabschnitte ausgebildet sind, die an einer Gehäuseseite unmittelbar gegeneinander abgedichtet sind, und die an der anderen Gehäuseseite über einen im Querschnitt L- oder U-förmigen zweiten Gehäusering, der in den Außenring an einem Gehäuseabschnitt anliegend eingesetzt ist, abgedichtet sind. Bei dieser Ausführungsform kommen also zur Gehäusebildung lediglich der Innen- und der Außenring sowie ein Gehäusering zum Einsatz. In einer weiteren Ausführungsform entfällt auch dieser Gehäusering, bei -dieser-Ausführungsform sind am Innen- und am Außenring beidseits der die Führungsflächen bildenden Abschnitte jeweils Gehäuseabschnitte ausgebildet, die an beiden Gehäuseseiten unmittelbar gegeneinander abgedichtet sind. Eine Abdichtung solcher Abschnitte gegeneinander kann zweckmäßigerweise über eine Bördelung am Ende eines oder beider Gehäuseabschnitte erfolgen, so dass im jeweiligen Bereich eine Spalt- oder Labyrinthdichtung realisiert werden kann. Alternativ ist auch die Verwendung eines separaten Dichtelements wie einer Dichtlippe oder dergleichen denkbar. Bei Verwendung eines Stahlkäfigs für die Kugelabstandshalterung ist eine Wärmebehandlung im Komplett-Härteverfahren möglich. Dabei werden die Teile zu einem kompletten Lager zusammengefügt und dann in einem entsprechenden Prozess wärmebehandelt, was sehr kostengünstig ist. Die Selbsthalterung erfolgt dabei über eine Bördelung am Innenring. Nach der Wärmebehandlung wird das Lager mit Schmierstoff befüllt und mit einem Gehäusering verschlossen.

Wie beschrieben besteht beim erfindungsgemäßen Wälzlager im Hinblick auf die geringen Genauigkeitsanforderungen die Möglichkeit, auf einfache Herstellungsverfahren zurückgreifen zu können, um die entsprechenden Lagerteile auszubilden. So ist es für eine kostengünstige Herstellung des Innenrings und des Außenrings möglich, diese spangebend im sogenannten Turmfertigungsverfahren herzustellen und nach der Wärmebehandlung und dem Schleifen axial durch "Sprengen" zu trennen. Werden die Wälzkörperlaufbahnen vorteilhaft durch Rollieren hergestellt, kann auf ein Schleifen verzichtet werden, da das Lager nur mit einem oszillierenden Schwenkwinkel von ca. ± 60° betrieben wird, das heißt, die Genauigkeitsklasse kann gegenüber herkömmlichen Lagern gröber sein. Alternativ ist es möglich, die Ringe aus Rohlingen im Fließpressverfahren herzustellen. Denkbar ist es auch, den Innen- und den Außenring zunächst komplett in einem Arbeitsgang im Fließpressverfahren herzustellen und anschließend durch einen Stanzschnitt zu trennen. Die Ringrohlinge können entweder aus rohrförmigem Halbzeug oder als Stanzteile aus Blech- oder Bandmaterial ausgestanzt werden. Als Werkstoff wird hier beispielsweise C80 modifiziert oder C45 modifiziert vorgeschlagen. Ersichtlich sind also alle einfachen Zieh-, Press- oder Spanverfahren verwendbar, wie auch einfache und kostengünstige Standardwerkstoffe verwendet werden können, nachdem an das Lager nur geringe Genauigkeitsanforderungen gestellt werden.

Die Kugeln sollten zweckmäßigerweise in einem Kunststoffschnappkäfig oder einem Stahlkugelkranzkäfig gehaltert sein, wobei diese Käfigarten relativ klein sind und die Ausbildung eines großen Schmiermittelraums zulassen.

### Kurze Beschreibung der Zeichnungen

Weitere Vorteile, Merkmale und Einzelheiten der Erfindung ergeben sich aus dem im folgenden beschriebenen Ausführungsbeispiel sowie anhand der Zeichnungen. Dabei zeigen:
- Fig. 1: zeigt ein erfindungsgemäßes Zweimassenschwungrad mit einem Wälzlager in einer geschnittenen Teilansicht,
- Fig. 2: eine Teilansicht im Schnitt des Wälzlagers einer ersten Ausführungsform,
- Fig. 3: eine Teilansicht im Schnitt des Wälzlagers einer zweiten Ausführungsform,
- Fig. 4: eine Teilansicht im Schnitt des Wälzlagers einer dritten Ausführungsform,
- Fig. 5: eine Teilansicht im Schnitt des Wälzlagers einer vierten Ausführungsform,
- Fig. 6: eine Teilansicht im Schnitt des Wälzlagers einer fünften Ausführungsform, und
- Fig. 7: eine Teilansicht im Schnitt des Wälzlagers einer sechsten Ausführungsform.

### Detaillierte Beschreibung der Zeichnungen

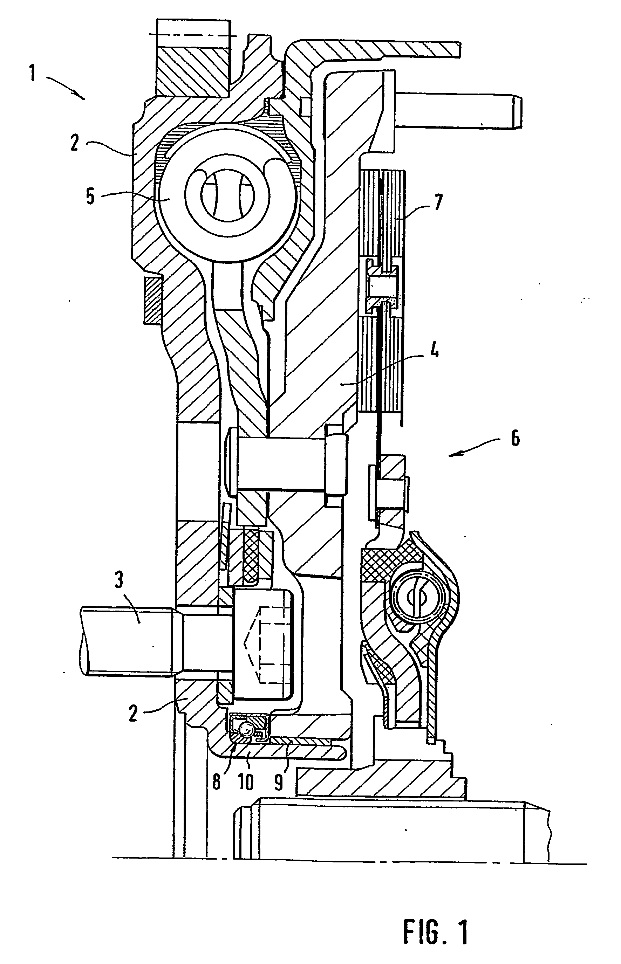

Fig. 1 zeigt in Form einer Teilschnittansicht ein erfindungsgemäßes Zweimassenschwungrad 1 bestehend aus einer Primärmasse 2, die über Verbindungsschrauben 3 an einer nicht näher gezeigten Abtriebswelle einer Brennkraftmaschine angeschraubt ist. Ferner ist eine Sekundärmasse 4 vorgesehen, die über halbkreisförmig gebogen angeordnete Spiralfederdämpfer 5 gedämpft bezüglich der Primärmasse 2 gelagert ist. Gezeigt ist ferner eine nicht komplett dargestellte Kupplung 6, die über ein nicht näher gezeigtes Kupplungspedal zum Lösen der Kraftkopplung zum Getriebe, das ebenfalls nicht näher gezeigt ist, betätigt wird, sowie deren Reibbeläge 7, die den Ort erhöhter Wärmebildung in diesem Bereich darstellen.

Die Primärmasse 2 und die Sekundärmasse 4 sind über zwei Lager drehbar bezüglich einander gelagert, nämlich ein Wälzlager in Form eines Axialschrägkugellagers 8 und ein Gleitlager 9. An der Primärmasse ist ein axial vorspringender zylindrischer Lagerträger 10 einstückig angeformt, auf dem das Axialschrägkugellager 8 mit seinem Innenring und das Gleitlager 10 aufgenommen sind. Ersichtlich ist der Lagerträger 10 sehr nahe zur Drehachse und damit sehr weit entfernt von den Reibbelägen 7, so dass zwar eine unzulässig hohe Wärmeentwicklung vermieden wird, jedoch ein nur sehr geringer Bauraum zur Integration der beiden Lager gegeben ist.

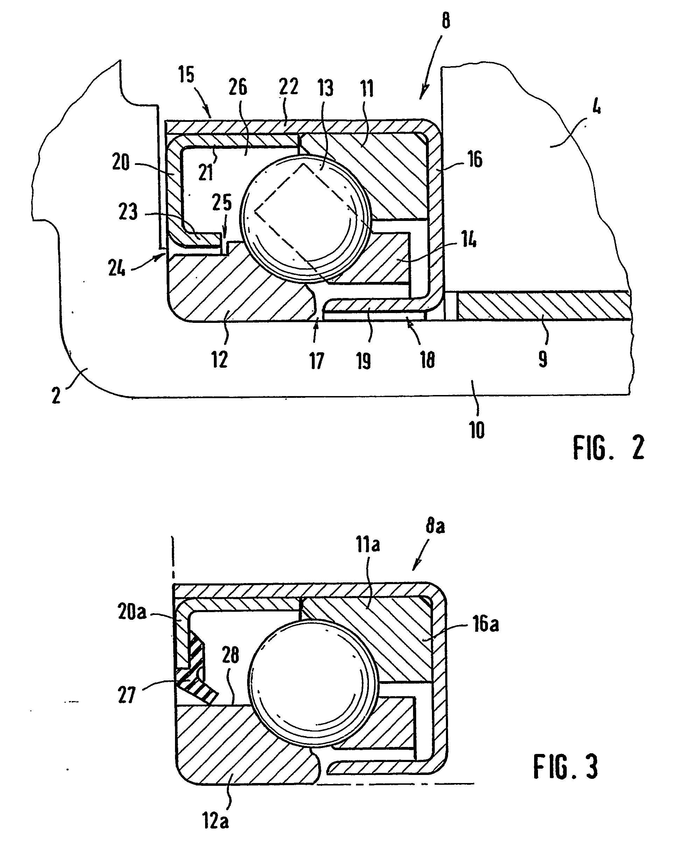

Eine erste Ausführungsform eines Axialschrägkugellagers 8, wie es in Fig. 1 gezeigt ist, ist in vergrößerter Darstellung in Fig. 2 gezeigt. Dieses Axialschrägkugellager 8 besteht aus einem Außenring 11 -und einem Innenring 12, die beispielsweise beide in einem Tiefzieh- oder Fließpressverfahren hergestellt wurden. Der Druckwinkel zu den zwischen ihnen aufgenommenen Kugeln 13, die in einem Kunststoffschnappkäfig oder einem Stahlkugelkranzkäfig 14 aufgenommen sind, beträgt bevorzugt 45°.

Vorgesehen ist ferner ein Gehäuse 15, bestehend aus einem bevorzugt tiefgezogenen, hülsenartigen Gehäusering 16, der im Wesentlichen U-förmig ausgeführt ist und den Außenring 11 an zwei Seiten anliegend umgreift. Zum Innenring 12 hin ist eine Spaltdichtung 17 realisiert, die mit einer Labyrinthdichtung 18, die zwischen dem Schenkel 19 des Gehäuserings 16 und dem Lagerträger 10 ausgebildet ist, verbunden ist. An der gegenüberliegenden Seite ist ein weiterer Gehäusering 20, der im Wesentlichen U-förmig ist, eingepresst. Dieser liegt mit seinem Schenkel 21 am äußeren Schenkel 22 des Gehäuserings 16 an. Über den zweiten Schenkel 23 des Gehäuserings 20, der endseitig gebördelt ist, wird eine Labyrinthdichtung 24 zum Innenring 12 sowie an der Stirnseite eine Spaltdichtung 25 realisiert. Das Gehäuse bildet vorteilhaft um den Kugelkranz herum einen großvolumigen Schmiermittelaufnahmeraum 26, in den Fett eingepresst werden kann.

In der Einbausituation liegt das Axialschrägkugellager 8 über den Innenring 12 auf dem Lagerträger 10 auf. Die zur am Lagerträger 10 anliegenden Ringfläche senkrecht stehende äußere Ringfläche des Innenrings 12 liegt axial widergelagert an einem entsprechenden Abschnitt an der Primärmasse 2 an. An dem Gehäusering 16 liegt wie Fig. 1 zeigt die Sekundärmasse 4 an. Fig. 2 zeigt ferner, das zwischen Sekundärmasse 4 und dem Lagerträger 10 als Teil der Primärmasse 2 angeordnete Gleitlager 9. Die Kombination des Axialschrägkugellagers 8 und des Radialgleitlagers 9 ist vorteilhaft, da bedingt durch den Druckwinkel, der bevorzugt 45° beträgt, und den Schmiegeverhältnissen an der Innenringlaufbahn von mindestens 104% sowie an der Außenringlaufbahn von mindestens 106% Lauftoleranzen bzw. Kippwinkelfehler etc. im beschränkten Umfang ausgeglichen werden können, ohne dass die Gebrauchsdauer vermindert wird. Einwirkende Axialkräfte, die beim Betätigen der nicht näher gezeigten Kupplung über die Sekundärmasse in die Lagerkombination eingeleitet werden, werden von dem Wälzlager 8 aufgenommen, während Radialkräfte über das Gleitlager 9 aufgefangen werden. Das Gleitlager 9 weist keinen radial stehenden Ansatz oder dergleichen, an dem Axialkräfte der Sekundärmasse angreifen könnten, auf, vielmehr ist das Radialgleitlager 9 ein quasi ausschließlich zylindrisches Lager, das ausschließlich radiale Kräfte aufnehmen kann. Axiale Kräfte werden ausschließlich in das Wälzlager 8 eingeleitet.

Eine weitere Ausführungsform eines Axialschrägkugellagers 8a zeigt Fig. 3. Dieses entspricht insoweit dem Axialschrägkugellager 8 aus Fig. 2, jedoch ist die Abdichtung des Gehäuserings 20a zum Innenring 12a anders realisiert. Bei dieser Ausführungsform ist am Gehäusering 20a ein Dichtelement 27 in Form einer Dichtlippe oder dergleichen angeordnet, bevorzugt aufgespritzt oder anvulkanisiert, die als schleifende Dichtung zur Fläche 28 des Innenrings 12a hin wirkt. An der gegenüberliegenden Seite des Innenrings 12a ist wie bereits aus Fig. 2 bekannt eine kombinierte Labyrinth-Spalt-Dichtung zwischen dem Gehäusering 16a, der auch hier den Außenring 11a umgreift, und dem Innenring 12a realisiert.

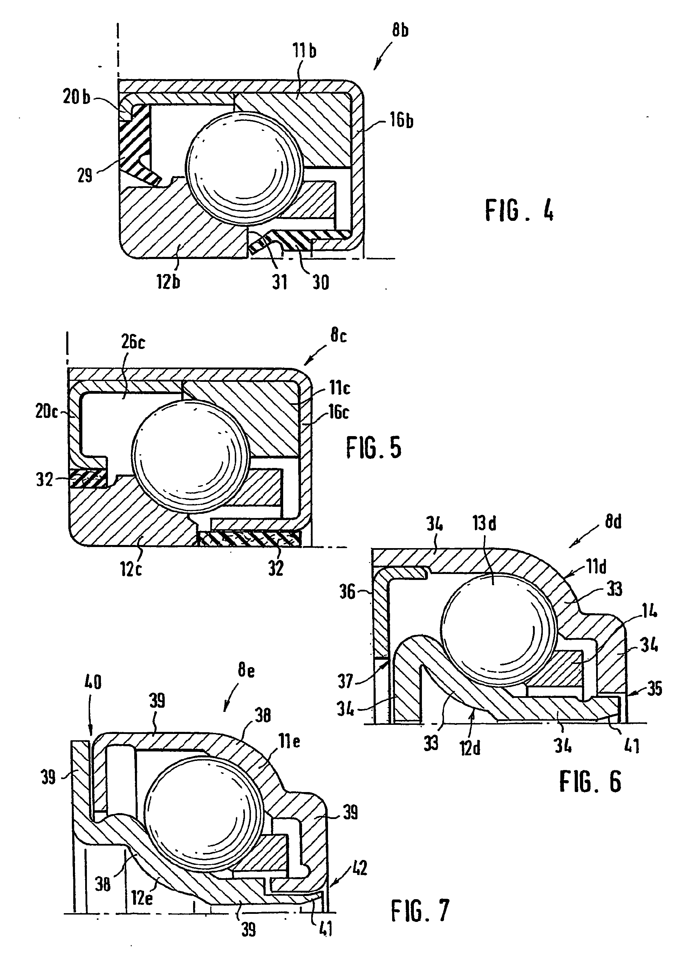

Fig. 4 zeigt ein Wälzlager 8b, das in seinem Aufbau grundsätzlich dem Wälzlager aus Fig. 2 bzw. 3 entspricht. Jedoch ist hier am Gehäusering 20b ein Dichtelement 29 in Form eines aufgeschnappten Dichtrings nebst Dichtlippe vorgesehen. An der anderen Dichtstelle ist, anders als bei den Ausführungsformen gemäß der Fig. 2 und 3, ebenfalls ein Dichtelement 30 in Form einer bevorzugt angespritzten oder aufvulkanisierten Dichtlippe angeordnet. Die Dichtlippe dichtet hier schleifend zur Fläche 31 des Innenrings 12b hin ab. Der Gehäusering 16b umgreift auch hier den Außenring 11b an zwei Seiten.

Fig. 5 zeigt schließlich ein weiteres Axialschrägkugellager 8c bestehend aus einem Außenring 11c, einem Innenring 12c, sowie zwei Gehäuseringen 16c und 20c. Als Dichtmittel sind hier jedoch zwei Vlies- oder Filzringe 32 eingesetzt, die den großräumigen Schmiermittelaufnahmeraum 26c abdichten.

Fig. 6 zeigt eine besonders vorteilhafte Ausführungsform eines Axialschrägkugellagers 8d. Dieses weist einen Außenring 11d und einen Innenring 12d auf, die jeweils entsprechende Führungsabschnitte 33 aufweisen, an denen die Kugeln 13d geführt sind. Beidseits dieser Abschnitte 33 sind Gehäuseabschnitte 34 angeformt, die die wesentlichen Teile des übrigen Lagergehäuses bilden. In Fig. 6 rechts stehend gezeigt sind die beiden sich nach rechts erstreckenden Gehäuseabschnitte 34 des Innenrings 12d und des Außenrings 11d unmittelbar gegeneinander über eine Spaltdichtung 35 abgedichtet. An der gegenüberliegenden Seite ist in den Abschnitt 34 des Außenrings 11 d ein Gehäusering 36 eingesetzt, der zu dem gebördelten Abschnitt 34 des Innenrings 12d eine Spaltdichtung 37 bildet. Bei dieser Ausführungsform sind insgesamt deutlich weniger Teile als bei den vorher beschriebenen Ausführungsformen erforderlich. Außenring 11d, Innenring 12d sowie der Gehäusering 36 können aus einfachen Rohlingen beispielsweise tiefgezogen werden. Die Herstellung dieses Lagers ist besonders einfach und kostengünstig. Eine weitere Reduzierung der Herstellkosten wird durch eine Komplett-Härtung des Lagers erreicht. Die Selbsthalterung wird durch die am Innenring angeformte Bördelung 41 erreicht. Nach der Wärmebehandlung wird das Lager befettet und mit dem Gehäusering 36 verschlossen.

Dies gilt in verstärktem Maß bezüglich des in Fig. 7 gezeigten Axialschrägkugellagers 8e. Auch dieses besteht aus einem Außenring 11 e und einem Innenring 12e, die jeweils zentrale Führungsabschnitte 38 für die Kugeln aufweisen, und an denen beidseits entsprechende Gehäuseabschnitte 39 angeformt sind, wobei diese Abschnitte an beiden Seiten unmittelbar gegeneinander abgedichtet sind. An den beiden Enden der beiden Abschnitte 39 des Außenrings 11e und des Innenrings 12e sind jeweils Bördelungen vorgesehen, die Enden liegen flächig aneinander und bilden zwischen sich eine Spaltdichtung 40 aus. Am gegenüberliegenden Gehäuseende ist am Gehäuseabschnitt 39 eine endseitige Bördelung vorgesehen, die flächig einem entsprechenden eingetieften Abschnitt des Gehäuseabschnitts 39 am Innenring 12e gegenüberliegt. Als Verliersicherung ist eine endseitige kleine Bördelung 41 vorgesehen, die in eine Spaltdichtung 42 übergeht. Die in Fig. 7 gezeigte Ausführungsform des Axialschrägkugellagers 8e ist diejenige, die die wenigsten Teile erfordert, mithin also am kostengünstigsten hergestellt werden kann, nachdem letztlich lediglich der Außenring 11e und der Innenring 12e vonnöten sind, die aus geeignetem Blech- oder Bandmaterial gestanzt und tiefgezogen werden können.

### Bezugszeichen

- 1: Zweimassenschwungrad
- 2: Primärmasse
- 3: Verbindungsschrauben
- 4: Sekundärmasse
- 5: Spiralfederdämpfer
- 6: Kupplung
- 7: Reibbeläge
- 8: Axialschrägkugellager
- 8a: Axialschrägkugellager
- 8b: Axialschrägkugellager
- 8c: Axialschrägkugellager
- 8d: Axialschrägkugellager
- 9: Gleitlager
- 10: Lagertragring
- 11: Außenring
- 11a: Außenring
- 11b: Außenring
- 11c: Außenring
- 11d: Außenring
- 11e: Außenring
- 12: Innenring
- 12a: Innenring
- 12b: Innenring
- 12c: Innenring
- 12d: Innenring
- 12e: Innenring
- 13: Kugeln
- 13d: Kugeln
- 14: Stahlkugelkranzkäfig
- 15: Gehäuse
- 16: Gehäusering
- 16a: Gehäusering
- 16b: Gehäusering
- 16c: Gehäusering
- 17: Spaltdichtung
- 18: Labyrinthdichtung
- 19: Schenkel
- 20: Gehäusering
- 20a: Gehäusering
- 20b: Gehäusering
- 20c: Gehäusering
- 21: Schenkel
- 22: Schenkel
- 23: Schenkel
- 24: Labyrinthdichtung
- 25: Spaltdichtung
- 26: Schmiermittelaufnahmeraum
- 26c: Schmiermittelaufnahmeraum
- 27: Dichtelement
- 28: Fläche
- 29: Dichtelement
- 30: Dichtelement
- 31: Fläche
- 32: Vlies- oder Filzringe
- 33: Führungsabschnitte
- 34: Gehäuseabschnitte
- 35: Spaltdichtung
- 36: Gehäusering
- 37: Spaltdichtung
- 38: Führungsabschnitte
- 39: Gehäuseabschnitte
- 40: Spaltdichtung
- 41: Bördelung
- 42: Spaltdichtung

## Patentansprüche

1. Zweimassenschwungrad für ein Kraftfahrzeug, umfassend ein Wälzlager, eine Primärmasse und eine Sekundärmasse, wobei die Massen über das Wälzlager drehbar bezüglich einander gelagert sind, wobei das Wälzlager als Schrägkugellager, insbesondere als Axialschrägkugellager, (8, 8a, 8b, 8c, 8d, 8e) ausgebildet ist, **dadurch gekennzeichnet, dass** das Wälzlager ein abgedichtetes Gehäuse (15), in dem in Achsrichtung gesehen wenigstens ein im Wesentlichen seitlich zu den Kugeln (13) liegender Schmiermittelaufnahmeraum (26) ausgebildet ist, aufweist, wobei dem der Aufnahme axialer Kräfte dienenden Wälzlager ein der Aufnahme radialer Kräfte dienendes zylindrisches Gleitlager (9) axial nebengeordnet ist.

2. Zweimassenschwungrad nach Anspruch 1, **dadurch gekennzeichnet, dass** das Gehäuse (15) mittels eines im Querschnitt im Wesentlichen U-förmigen ersten Gehäuserings (16, 16a, 16b, 16c) und eines im Querschnitt L- oder U-förmigen zweiten Gehäuserings (20, 20a, 20b, 20c), die entgegengesetzt zueinander gerichtet sind, gebildet ist.

3. Zweimassenschwungrad nach Anspruch 2, **dadurch gekennzeichnet, dass** der erste Gehäusering (16, 16a, 16b, 16c) den Außenring (11, 11a, 11 b, 11 c) umgreift und der zweite Gehäusering (20, 20a, 20b, 20c) in den ersten Gehäusering (16, 16a, 16b, 16c), am äußeren Ringschenkel (22) des ersten Gehäuserings (16, 16a, 16b, 16c) anliegend eingesetzt ist, wobei beide Gehäuseringe (16, 16a, 16b, 16c, 20, 20a, 20b, 20c) zum Innenring (12, 12a, 12b, 12c) hin abgedichtet sind.

4. Zweimassenschwungrad nach Anspruch 3, **dadurch gekennzeichnet, dass** die Dichtung eines Gehäuserings (16, 16a, 16b, 16c, 20, 20a, 20b, 20c) zum Innenring (12, 12a, 12b, 12c) über eine Spalt- oder Labyrinthdichtung (17, 18, 24, 25) oder über ein separates Dichtelement realisiert ist.

5. Zweimassenschwungrad nach Anspruch 4, **dadurch gekennzeichnet, dass** als Dichtelement eine am Schenkel eines Gehäuserings angeordnete, vorzugsweise schleifende Ringdichtlippe (27, 29, 30) oder ein Vlies- oder Filzring (32) ist.

6. Zweimassenschwungrad nach Anspruch 1, **dadurch gekennzeichnet, dass** der Innenring (12d, 12e) und/oder der Außenring (11 d, 11 e) ein- oder beidseits des die Führungsfläche bildenden Abschnitts (33, 38) angeformte, einen Teil des Gehäuses bildende Gehäuseabschnitte (34, 39) aufweist.

7. Zweimassenschwungrad nach Anspruch 6, **dadurch gekennzeichnet, dass** am Innen- und am Außenring (11d, 12d) beidseits der die Führungsflächen bildenden Abschnitte (33) jeweils Gehäuseabschnitts (34) ausgebildet sind, die an einer Gehäuseseite unmittelbar gegeneinander abgedichtet sind, und die an der anderen Gehäuseseite über einen im Querschnitt L- oder U-förmigen Gehäusering (36), der in den Außenring (11d) an einem Gehäuseabschnitt (34) anliegend eingesetzt ist, abgedichtet sind.

8. Zweimassenschwungrad nach Anspruch 6, **dadurch gekennzeichnet, dass** am Innen- und am Außenring (11e, 12e) beidseits der die Führungsflächen (38) bildenden Abschnitte jeweils Gehäuseabschnitts (39) ausgebildet sind, die an beiden Gehäuseseiten unmittelbar gegeneinander abgedichtet sind.

9. Zweimassenschwungrad nach Anspruch 7 oder 8, **dadurch gekennzeichnet, dass** zwei gegeneinander abgedichtete Gehäuseabschnitte (34, 39) über eine Bördelung am Ende wenigstens eines der Gehäuseabschnitte (34, 38) abgedichtet sind.

10. Zweimassenschwungrad nach einem der Ansprüche 7 bis 9, **dadurch gekennzeichnet, dass** eine Dichtung über eine Spalt- oder Labyrinthdichtung (35, 37, 40, 42) oder über ein separates Dichtelement realisiert ist.

11. Zweimassenschwungrad nach einem der vorangehenden Ansprüche, **dadurch gekennzeichnet, dass** die Gehäuseringe (16, 16a, 16b, 16c, 20, 20a, 20b, 20c) oder die Innen- und Außenringe (11, 11 a, 11 b, 11 c, 11 d, 11e, 12, 12a, 12b, 12c, 12d, 12e) gezogen, gepresst, spangebend hergestellt und gegebenenfalls nachbearbeitet sind.

12. Zweimassenschwungrad nach einem der vorangehenden Ansprüche, **dadurch gekennzeichnet, dass** die Kugeln (13) in einem Kunststoffschnappkäfig oder einem Stahlkugelkranzkäfig (14) gehaltert sind.

## Claims

1. Dual-mass flywheel for a motor vehicle, comprising a rolling bearing, a primary mass and a secondary mass, the masses being mounted rotatably with respect to one another via the rolling bearing, the rolling bearing being designed as an angular ball bearing, in particular as an axial angular ball bearing (8, 8a, 8b, 8c, 8d, 8e), **characterized in that** the rolling bearing has a sealed-off housing (15), in which, as viewed in the axial direction, at least one lubricant reception space (26) lying essentially laterally with respect to the walls (13) is formed, a cylindrical plain bearing (9) which serves for the absorption of radial forces being arranged axially next to the rolling bearing serving for the absorption of axial forces.

2. Dual-mass flywheel according to Claim 1, **characterized in that** the housing (15) is formed by means of a first housing ring (16, 16a, 16b, 16c) of essentially U-shaped cross section and a second housing ring (20, 20a, 20b, 20c) of L-shaped or U-shaped cross section, which housing rings are directed opposite to one another.

3. Dual-mass flywheel according to Claim 2, **characterized in that** the first housing ring (16, 16a, 16b, 16c) surrounds the outer ring (11, 11a, 11b, 11c) and the second housing ring (20, 20a, 20b, 20c) is inserted into the first housing ring (16, 16a, 16b, 16c) so as to bear against the outer ring leg (22) of the first housing ring (16, 16a, 16b, 16c), the two housing rings (16, 16a, 16b, 16c, 20, 20a, 20b, 20c) being sealed off with respect to the inner ring (12, 12a, 12b, 12c).

4. Dual-mass flywheel according to Claim 3, **characterized in that** the sealing of a housing ring (16, 16a, 16b, 16c, 20, 20a, 20b, 20c) with respect to the inner ring (12, 12a, 12b, 12c) is implemented via a gap seal or labyrinth seal (17, 18, 24, 25) or via a separate sealing element.

5. Dual-mass flywheel according to Claim 4, **characterized in that** the sealing element is a preferably brushing annular sealing lip (27, 29, 30), arranged on the leg of a housing ring, or a nonwoven ring or felt ring (32).

6. Dual-mass flywheel according to Claim 1, **characterized in that** the inner ring (12d, 12e) and/or the outer ring (11d, 11e) have/has housing portions (34, 39) which are moulded in or are moulded on one or both sides of the portion (33, 38) forming the guide surface and which form part of the housing.

7. Dual-mass flywheel according to Claim 6, **characterized in that** in each case housing portions (34) are formed on the inner and on the outer ring (11d, 12d) on both sides of the portions (33) forming the guide surfaces and are sealed off directly with respect to one another on one housing side and are sealed off on the other housing side via a housing ring (36) of L-shaped or U-shaped cross section which is inserted into the outer ring (11d) so as to bear against a housing portion (34).

8. Dual-mass flywheel according to Claim 6, **characterized in that** in each case housing portions (39) are formed on the inner and the outer ring (11e, 12e) on both sides of the portions forming the guide surfaces (38) and are sealed off directly with respect to one another on both housing sides.

9. Dual-mass flywheel according to Claim 7 or 8, **characterized in that** two housing portions (34, 39) sealed off with respect to one another are sealed off via crimping the end of at least one of the housing portions (34, 38).

10. Dual-mass flywheel according to one of Claims 7 to 9, **characterized in that** stealing is implemented via a gap seal or labyrinth seal (35, 37, 40, 42) or via a separate sealing element.

11. Dual-mass flywheel according to one of the preceding claims, **characterized in that** the housing rings (16, 16a, 16b, 16c, 20, 20a, 20b, 20c) or the inner and outer rings (11, 11a, 11b, 11c, 11d, 11e, 12, 12a, 12b, 12c, 12d, 12e) are drawn, pressed, produced by cutting and, if appropriate, remachined.

12. Dual-mass flywheel according to one of the preceding claims, **characterized in that** the balls (13) are held in a plastic snap cage or a steel-ball collar cage (14).

## Revendications

1. Volant d'inertie à deux masses d'un véhicule automobile, comprenant un palier à roulement, une masse primaire et une masse secondaire, les masses étant montées à rotation l'une par rapport à l'autre par rapport au palier à roulement, le palier à roulement étant réalisé sous forme de roulement à billes à contact oblique, notamment sous forme de rouleau à billes à contact oblique axial (8, Sa, 8b, 8c, 8d, 8e), **caractérisé en ce que** le palier à roulement présente un boîtier étanche (15) dans lequel, vu dans la direction axiale, est réalisé au moins un espace de réception de lubrifiant (26) situé essentiellement latéralement par rapport aux billes (13), un palier lisse (9) cylindrique servant à recevoir les forces radiales étant disposé axialement à côté du palier à roulement servant à recevoir les forces axiales.

2. Volant d'inertie à deux masses selon la revendication 1, **caractérisé en ce que** le boîtier (15) est formé au moins d'une première bague de boîtier (16, 16a, 16b, 16c) de section transversale essentiellement en forme de U, et d'une deuxième bague de boîtier (20, 20a, 20b, 20c) de section transversale en forme de L ou de U, lesquelles sont orientées à l'opposé l'une de l'autre.

3. Volant d'inertie à deux masses selon la revendication 2, **caractérisé en ce que** la première bague de boîtier (16, 16a, 16b, 16c) vient en prise autour de la bague extérieure (11, 11a, 11b, 11c) et la deuxième bague de boîtier (20, 20a, 20b, 20c) est insérée dans la première bague de boîtier (16, 16a, 16b, 16c), en appui contre la branche annulaire extérieure (22) de la première bague de boîtier (16, 16a, 16b, 16c), les deux bagues de boîtier (16, 16a, 16b, 16c, 20, 20a, 20b, 20c) étant rendues étanches vis-à-vis de la bague intérieure (12, 12a, 12b, 12c).

4. Volant d'inertie à deux masses selon la revendication 3, **caractérisé en ce que** l'étanchéité d'une bague de boîtier (16, 16a, 16b, 16c, 20, 20a, 20b, 20c) par rapport à la bague intérieure (12, 12a, 12b, 12c) est réalisée par le biais d'un joint à fente ou à labyrinthe (17, 18, 24, 25) ou par le biais d'un élément d'étanchéité séparé.

5. Volant d'inertie à deux masses selon la revendication 4, **caractérisé en ce que** l'on prévoit comme élément d'étanchéité une lèvre d'étanchéité annulaire (27, 29, 30) disposée sur la branche d'une bague de boîtier, de préférence une lèvre d'étanchéité annulaire abrasive ou une rondelle en toile ou en feutre (32).

6. Volant d'inertie à deux masses selon la revendication 1, **caractérisé en ce que** la bague intérieure (12d, 12e) et/ou la bague extérieure (11d, 11e) présentent des portions de boîtier (34, 39) formant une partie du boîtier, façonnées d'un côté ou des deux côtés de la portion (33, 38) formant la surface de guidage.

7. Volant d'inertie à deux masses selon la revendication 6, **caractérisé en ce que** sur la bague intérieure et la bague extérieure (11d, 12d), de chaque côté des portions (33) formant les surfaces de guidage, sont à chaque fois réalisées des portions de boîtier (34) qui sont étanchées directement l'une par rapport à l'autre d' un côté du boîtier, et qui sont étanchées de l'autre côté du boîtier par le biais d'une bague de boîtier (36) de section transversale en forme de L ou de U, qui est insérée dans la bague extérieure (11d) en appui contre une portion de boîtier (34).

8. Volant d'inertie à deux masses selon la revendication 6, **caractérisé en ce que** sur la bague intérieure et la bague extérieure (11e, 12e) de chaque côté des portions formant les surfaces de guidage (38), sont réalisées à chaque fois des portions de boîtier (39) qui sont étanchées directement l'une par rapport à l'autre sur les deux côtés du boîtier.

9. Volant d'inertie à deux masses selon la revendication 7 ou 8, **caractérisé en ce que** deux portions de boîtier étanchées l'une par rapport à l'autre (34, 39) sont étanchées par le biais d'un bordage à l'extrémité d'au moins l'une des portions de boîtier (34, 39).

10. Volant d'inertie à deux masses selon l'une quelconque des revendications 7 à 9, **caractérisé en ce qu'**un joint d'étanchéité est réalisé par le biais d'un joint à fente ou à labyrinthe (35, 37, 40, 42) ou par le biais d'un élément d'étanchéité séparé.

11. Volant d'inertie à deux masses selon l'une quelconque des revendications précédentes, **caractérisé en ce que** les bagues de boîtier (16, 16a, 16b, 16c, 20, 20a, 20b, 20c) ou les bagues intérieure et extérieure (11, 11a, 11b, 11c, 11d, 11e, 12, 12a, 12b, 12c, 12d, 12e) sont fabriquées par emboutissage, pressage, par enlèvement de copeaux, et éventuellement sont post-usinées.

12. Volant d'inertie à deux masses selon l'une quelconque des revendications précédentes, **caractérisé en ce que** les billes (13) sont retenues dans une cage à encliquetage en plastique ou dans une cage en couronne pour billes d'acier (14).
